# EUROPÄISCHE PATENTSCHRIFT

(11) **EP 2 713 477 B1**
(45) Veröffentlichungstag und Bekanntmachung des Hinweises auf die Patenterteilung: **14.09.2016**
(21) Anmeldenummer: 12189966.0
(22) Anmeldetag: 25.10.2012
(51) Int. Cl.: H02J 9/04, F03D 9/00, H02J 3/38

(54) **Verfahren zum Betreiben einer elektrischen Schaltung für einen Windpark**
Method for operating an electric circuit for a wind farm
Procédé de fonctionnement d'un circuit électrique pour parc éolien

(30) Priorität: 01.10.2012 DE 102012217934
(43) Veröffentlichungstag der Anmeldung: 02.04.2014
(73) Patentinhaber: General Electric Technology GmbH, 5400 Baden (CH)
(72) Erfinder: Hentschel, Gert, 01109 Dresden (DE)
(74) Vertreter: DREISS Patentanwälte PartG mbB

(56) Entgegenhaltungen:
- EP-A1- 1 063 763
- EP-A1- 2 503 146
- EP-A2- 1 739 807
- EP-A2- 1 752 659
- EP-A2- 2 001 120
- EP-A2- 2 065 901
- DE-A1-102011 003 459
- DONG ENERGY: 'Low Voltage Back Feed Power Supply System for Offshore Wind Farms Wind Power Low Voltage Back Feed Power Supply System for Offshore Wind Farms', [Online] 20 März 2014, XP055169410 Gefunden im Internet: <URL:http://assets.dongenergy.com/DONGEnerg yDocuments/Wpopa/Low Voltage Back Feed Power Supply System for Offshore Wind Farms_EN.pdf> [gefunden am 2015-02-12]
- ARANA I ET AL: "Energization of Wind Turbine Transformers With an Auxiliary Generator in a Large Offshore Wind Farm During Islanded Operation", IEEE TRANSACTIONS ON POWER DELIVERY, IEEE SERVICE CENTER, NEW YORK, NY, US, vol. 26, no. 4, 1 October 2011 (2011-10-01), pages 2792-2800, XP011385568, ISSN: 0885-8977, DOI: 10.1109/TPWRD.2011.2163648

## Beschreibung

Die Erfindung betrifft ein Verfahren zum Betreiben einer elektrischen Schaltung für einen Windpark, wobei die elektrische Schaltung ein erstes Netz aufweist, wobei das erste Netz in einem Normalbetrieb, in dem mindestens ein von einer Windenergieanlage angetriebener Generator mit dem ersten Netz gekoppelt ist, mit einer ersten Betriebsspannung betrieben wird.

Die Erfindung betrifft ferner eine elektrische Schaltung nach dem Oberbegriff des Patentanspruchs 8.

In einem Windpark ist eine Mehrzahl von Windenergieanlagen (WEA) über zugehörige Generatoren (WEA-Generatoren) an ein erstes Netz, das auch als Innerparknetz bezeichnet wird, angeschlossen. Weiterhin ist üblicherweise auch mindestens ein von einem Dieselaggregat angetriebener elektrischer Generator (Dieselgenerator) vorhanden, der zur Deckung des sogenannten Eigenbedarfs des Windparks vorgesehen ist, wenn die Windenergieanlagen im Wesentlichen keine elektrische Energie erzeugen und auch ansonsten keine Energieversorgung des Windparks zum Beispiel von einem landgebundenen Energieversorgungsnetz mehr vorhanden ist. Bei dem genannten Eigenbedarf handelt es sich um diejenige elektrische Energie, die erforderlich ist, um den Windpark zu betreiben.

Insbesondere in einem Netzersatzbetrieb, bei dem die Windenergieanlagen des Windparks von dem Dieselgenerator gespeist werden, und bei dem keine Verbindung zu dem landgebundenen Energieversorgungsnetz besteht, ist eine exakte Kompensation der für den Betrieb des Innerparknetzes erforderlichen Ladeleistung, die aus dem Blindleistungsbedarf des Innerparknetzes resultiert, sehr schwierig, weil die Längen der zu dem Innerparknetz gehörigen Kabel ("Kabelverlegelängen") und die elektrischen Parameter dieser Kabel nicht genau bekannt sind. Zudem unterliegen die elektrischen Parameter wie z.B. ein Kapazitätsbelag der Kabel fertigungstechnisch bedingten Streuungen, was eine Vorhersage der Ladeleistung für ein bestehendes Innerparknetz weiter erschwert. Darüber hinaus sind die zur Deckung des Eigenbedarfs vorgesehenen Dieselgeneratoren nur eingeschränkt in der Lage, die zur Bereitstellung der Ladeleistung erforderliche Blindleistung abzugeben. Somit ist bei den herkömmlichen Systemen eine zuverlässige Eigenbedarfsversorgung nicht immer gewährleistet.

Eine Druckschrift DE 10 2011 003 459 A1 beschreibt eine elektrische Schaltung für einen Windpark, wobei die elektrische Schaltung ein erstes Netz aufweist, mit dem mindestens ein von einer Windenergieanlage angetriebener WEA-Generator gekoppelt ist, und mit dem mindestens ein von einer Brennkraftmaschine angetriebener Maschinengenerator gekoppelt ist. Eine weitere Druckschrift EP 1 752 659 A2 beschreibt ein Verfahren zum Betrieb eines Windenergieanlagenparks, insbesondere eines Offshore-Windenergieanlagenparks, bei Ausfall oder Störung eines den Windenergieanlagenpark versorgenden Spannungsnetzes (Versorgungsnetz) oder bei geplanten Abschaltungen von Übertragungsnetzkomponenten. Die EP 2 065 901 A2 betrifft ein Kabel, welches einen Kabelmantel sowie mindestens zwei davon umfasste Mittelspannungsdrähte aufweist. Weiterhin sind innerhalb des Kabelmantels mindestens zwei Drähte für eine Niederspannung vorhanden. Eine Druckschrift EP 2 503 146 A1 beschreibt ein Verfahren zum Betreiben einer Einrichtung zur elektrischen Energieerzeugung, welche mindestens eine Windturbine umfasst, insbesondere während eines Fehlers in einem Verbrauchernetz, in welches elektrische Energie eingespeist werden soll.

Demgemäß ist es Aufgabe der vorliegenden Erfindung, eine zuverlässige Eigenbedarfsversorgung eines Windparks auch dann sicherzustellen, wenn keine Energieversorgung des Windparks zum Beispiel von einem landgebundenen Energieversorgungsnetz mehr vorhanden ist.

Diese Aufgabe wird bei dem Verfahren der eingangs genannten Art erfindungsgemäß dadurch gelöst, dass das erste Netz (Innerparknetz) in einer von dem Normalbetrieb verschiedenen zweiten Betriebsart mit einer zweiten Betriebsspannung betrieben wird, wobei die zweite Betriebsspannung kleiner ist als die erste Betriebsspannung.

Erfindungsgemäß ist erkannt worden, dass bei dem Betrieb des Innerparknetzes mit gegenüber dem Normalbetrieb geringerer Betriebsspannung ein Blindleistungsbedarf des Innerparknetzes geringer ist, was durch die geringere Ladeleistung u.a. der Kabel des Innerparknetzes bedingt ist. Daher wird vorgeschlagen, das Innerparknetz bei der von dem Normalbetrieb verschiedenen zweiten Betriebsart mit einer geringeren Betriebsspannung zu betreiben, um seine Ladeleistung zu reduzieren. Dies bedingt den weiteren Vorteil, dass auch die Varianz der Ladeleistung, die sich durch die unzureichende Kenntnis der genauen Kabelverlegelängen und Kabelparameter ergibt, reduziert wird. Durch den bei Betrieb mit geringerer Betriebsspannung absolut gesehen geringeren Blindleistungsbedarf einerseits und die damit einhergehend ebenfalls reduzierte Varianz des Blindleistungsbedarfs andererseits ist eine zuverlässigere Speisung des Innerparknetzes in der zweiten Betriebsart ermöglicht. Dies gilt insbesondere für Betriebsszenarien, in denen das Innerparknetz nicht mit einem anderen Netz wie z.B. einem landgebundenen Energieversorgungsnetz gekoppelt ist, das üblicherweise dazu beitragen kann, den nicht genau vorhersehbaren Blindleistungsbedarf des Innerparknetzes zu decken. Vorteilhaft ermöglicht das erfindungsgemäße Verfahren einen zuverlässigen Betrieb unter Bereitstellung der Ladeleistung für das Innerparknetz auch dann, wenn z.B. nur ein Dieselgenerator bereitsteht, um den Betrieb des Innerparknetzes aufrechtzuerhalten, beispielsweise um die Eigenbedarfsversorgung des Windparks sicherzustellen.

Bei einer vorteilhaften Ausführungsform ist vorgesehen, dass in der zweiten Betriebsart a) mindestens ein von einer Windenergieanlage angetriebener Generator nicht mit dem ersten Netz gekoppelt ist und/oder b) das erste Netz von einem Energieversorgungsnetz getrennt ist. Insbesondere kann die zweite Betriebsart, in der das erste Netz (Innerparknetz) erfindungsgemäß mit gegenüber der Normalbetriebsart geringerer Betriebsspannung betrieben wird, ein Netzersatzbetrieb sein. In der Normalbetriebsart ist das Innerparknetz beispielsweise mit einem landgebundenen Energieversorgungsnetz gekoppelt, so dass ggf. benötigte Blindleistung für das Innerparknetz von dem landgebundenen Energieversorgungsnetz beziehbar ist. Alternativ oder ergänzend können in der Normalbetriebsart auch ein oder mehrere von einer entsprechenden Windenergieanlage angetriebene Generatoren mit dem ersten Netz gekoppelt sein.

Bei einer vorteilhaften Ausführungsform ist vorgesehen, dass die erste Betriebsspannung etwa 33 kV (Kilovolt) oder mehr beträgt, und dass die zweite Betriebsspannung zwischen etwa 0,4 kV und etwa 6 kV beträgt. Die zweite Betriebsspannung kann auch etwa 10 kV oder mehr betragen. Die für den Normalbetrieb des ersten Netzes vorgeschlagene Spannung von etwa 33 kV entspricht beispielsweise der Sekundärspannung von Transformatoren, die den WEA-Generatoren zugeordnet sind und ermöglicht eine verhältnismäßig verlustarme elektrische Energieübertragung über das erste Netz, beispielsweise um die mittels der WEA-Generatoren erhaltene elektrische Energie an ein Versorgungsnetz weiterzuleiten. Die für die zweite Betriebsart, insbesondere den Netzersatzbetrieb, vorgeschlagene kleinere zweite Betriebsspannung zwischen bevorzugt etwa 0,4 kV und etwa 6 kV bedingt vorteilhaft eine gegenüber der ersten Betriebsspannung von etwa 33 kV wesentlich verringerte Ladeleistung des ersten Netzes, da die Ladeleistung proportional zu dem Quadrat der Betriebsspannung ist. Neben einer absolut gesehen wesentlich verringerten Ladeleistung des Innerparknetzes ergibt sich durch die verringerte zweite Betriebsspannung auch eine deutlich verringerte Varianz der Ladeleistung für ein bestehendes Innerparknetz, die wie bereits beschrieben durch nicht genau bekannte Kabellängen und Kabelparameter der für das Innerparknetz verwendeten Kabel bedingt ist. Dies ermöglicht vorteilhaft eine zuverlässige Bereitstellung der Ladeleistung in der zweiten Betriebsart mit einem Dieselgenerator und/oder anderen zu dem Windpark lokalen Energieversorgungsmitteln, insbesondere auch dann, wenn die für den Betrieb des ersten Netzes erforderliche Ladeleistung nicht wenigstens teilweise aus einem (landgebundenen) Energieversorgungsnetz oder von einem WEA-Generator bezogen werden kann.

Bei einer weiteren vorteilhaften Ausführungsform ist vorgesehen, dass in der zweiten Betriebsart mindestens ein die zweite Betriebsspannung bereitstellender Generator mit dem ersten Netz verbunden wird, so dass die für den Eigenbedarf erforderliche Leistung direkt von dem Generator in das erste Netz, also das Innerparknetz, eingespeist werden kann. Bei dem Generator kann es sich bevorzugt um einen Dieselgenerator handeln. Andere elektrische Generatoren oder Batterien mit Wechselrichter oder dergleichen sind ebenfalls denkbar. Der Generator kann beispielsweise eine Wechselspannung von etwa 0,4 kV oder etwa 6kV oder andere Spannungsniveaus für den Betrieb des Innerparknetzes bereitstellen. Der Generator kann vorteilhaft in eine WEA des Windparks integriert sein oder auf einer dem Windpark zugehörigen Plattform eines Offshore-Umspannwerks usw.

Bei einer weiteren vorteilhaften Ausführungsform ist vorgesehen, dass der Generator über einen Transformator mit dem ersten Netz verbunden wird, so dass eine von dem Generator bereitgestellte Spannung auf ein anderes Spannungsniveau transformiert werden kann, um das erste Netz zu speisen bzw. zu betreiben. Z.B. kann der Generator eine Ausgangsspannung von 0,4 kV aufweisen, die mittels des ihm zugeordneten Transformators auf ein Spannungsniveau von z.B. 2kV oder 6kV transformiert wird, um hiermit das erste Netz zu speisen.

Bei einer weiteren vorteilhaften Ausführungsform ist vorgesehen, dass in der zweiten Betriebsart mindestens eine Windenergieanlage über das erste Netz durch die zweite Betriebsspannung mit elektrischer Energie zur Deckung ihres Eigenbedarfs versorgt wird. Aufgrund der erfindungsgemäß verringerten Betriebsspannung während der zweiten Betriebsart ergibt sich vorteilhaft ein einfacher und effizienter Betrieb des ersten Netzes auch dann, wenn die elektrische Energie zur Eigenbedarfsversorgung und für den Betrieb des ersten Netzes von einem Generator bereitgestellt wird.

Bei einer weiteren vorteilhaften Ausführungsform ist vorgesehen, dass mindestens ein zu einem elektrischen Eigenbedarf einer Windenergieanlage beitragender Verbraucher in der zweiten Betriebsart entweder direkt oder über einen Eigenbedarfstransformator mit dem ersten Netz verbunden wird.

Eine weitere Lösung der Aufgabe der vorliegenden Erfindung ist durch eine elektrische Schaltung gemäß Patentanspruch 8 angegeben.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

In der Zeichnung zeigt:
- Figur 1: schematisch ein Blockschaltbild eines Ausführungsbeispiels einer erfindungsgemäßen elektrischen Schaltung,
- Figur 2a bis 2d: jeweils weitere Ausführungsformen der erfindungsgemäßen elektrischen Schaltung,
- Figur 3: schematisch ein Blockschaltbild eines weiteren Ausführungsbeispiels einer erfindungsgemäßen elektrischen Schaltung, und
- Figur 4: ein vereinfachtes Flussdiagramm einer Ausführungsform des erfindungsgemäßen Verfahrens.

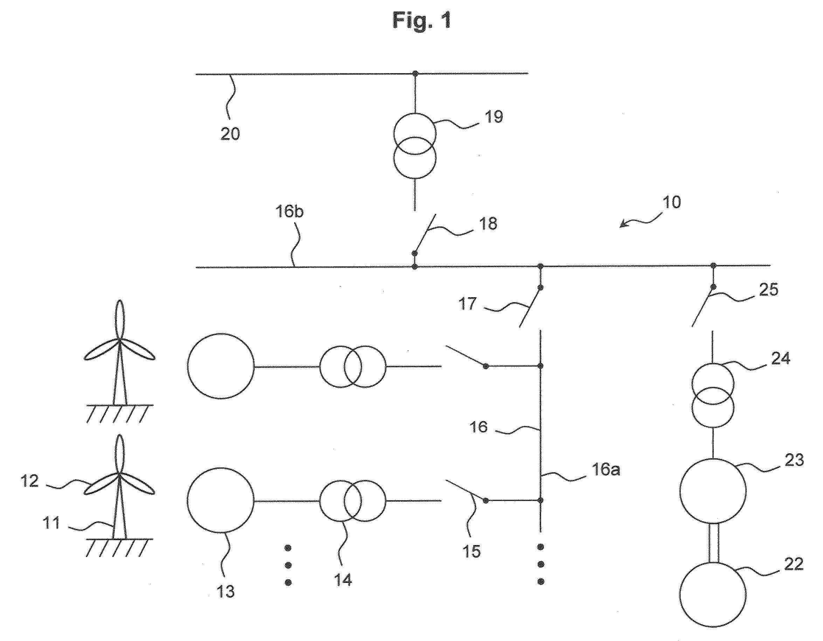

In der Figur 1 ist eine elektrische Schaltung 10 eines sogenannten Offshore-Windparks dargestellt, also einer auf See befindlichen, räumlichen Ansammlung einer Mehrzahl von Windenergieanlagen (Windenergieanlage = WEA).

In der Figur 1 sind beispielhaft zwei Windenergieanlagen 11 gezeigt, die jeweils dazu vorgesehen sind, die Bewegungsenergie des Windes in elektrische Energie umzuwandeln. Hierzu weist jede der üblicherweise auf seegebundenen Plattformen aufgebauten Windenergieanlagen 11 jeweils ein Windrad 12 auf, das mit einem elektrischen WEA-Generator 13 mechanisch gekoppelt ist und diesen antreibt.

Die von den WEA-Generatoren 13 erzeugte elektrische Energie wird über jeweils einen WEA-Transformator 14 und über jeweils einen WEA-Schalter 15 in eine erste Sammelschiene 16a eines ersten Netzes 16 eingespeist. Bei dem ersten Netz 16 kann es sich beispielsweise um ein Mittelspannungsdrehstromnetz von 33 kV handeln, das auch als Innerparknetz bezeichnet wird, weil es die Windenergieanlagen 11 des Windparks miteinander verbindet. Das Innerparknetz 16 ist dabei im Wesentlichen für alle seegebundenen Einrichtungen des Windparks vorgesehen und befindet sich damit im Wesentlichen auf See.

Die erste Sammelschiene 16a des Innerparknetzes ist über einen Sammelschienen-Schalter 17 mit einer zweiten Sammelschiene 16b des Innerparknetzes 16 verbunden.

Die zweite Sammelschiene 16b des Innerparknetzes 16 ist über einen Hauptschalter 18 und einen Haupttransformator 19 mit einem Übertragungsnetz 20 verbunden, beispielsweise mit einem Hochspannungsdrehstromnetz von 155 kV. Das Übertragungsnetz 20 ist im Wesentlichen dazu vorgesehen, die innerhalb des Windparks erzeugte elektrische Energie auf das Festland zu übertragen. Im Rahmen des Übertragungsnetzes 20 kann auch alternativ oder zusätzlich eine Gleichspannungsübertragung vorhanden sein. Das Übertragungsnetz 20 wird auch als zweites Netz bezeichnet.

Das Übertragungsnetz 20 ist mit einem nicht-dargestellten Land-Netz verbunden, bei dem es sich beispielsweise um ein auf dem Festland befindliches Energieversorgungsnetz eines Energieversorgungsunternehmens handelt, über das Industrieanlagen und Haushalte mit elektrischer Energie versorgt werden.

Auf einer Plattform einer der Windenergieanlagen 11 oder auf einer sonstigen seegebundenen Plattform des Windparks ist eine Brennkraftmaschine 22 vorhanden, beispielsweise eine DieselBrennkraftmaschine. Es versteht sich, dass anstelle der Brennkraftmaschine 22 auch jegliches anderes, nichtelektrisches Aggregat vorhanden sein kann, das dazu geeignet ist, einen Generator in eine Drehbewegung zu versetzen.

Über eine mechanische Kopplung treibt die Brennkraftmaschine 22 einen Generator 23 an, der über einen Transformator 24 und einen Schalter 25 mit der zweiten Sammelschiene 16b des Innerparknetzes 16 verbunden ist. Es versteht sich, dass auch mehrere Brennkraftmaschinen 22 und/oder mehrere Geratoren 23 und/oder mehrere Transformatoren 24 und/oder mehrere Schalter 25 vorhanden sein können, die parallel geschaltet sein können.

Alternativ zu dem Generator 22 kann auch eine Batterieanlage (nicht gezeigt) oder eine Brennstoffzelle oder dergleichen vorgesehen sein, denen ein Wechselrichter zur Erzeugung einer Wechselspannung zugeordnet ist.

Die einzelnen Plattformen der Windenergieanlagen 11 sowie die gegebenenfalls vorhandenen, sonstigen Plattformen des Windparks müssen für ihren Betrieb mit elektrischer Energie versorgt werden. Dies wird auch als sogenannter Eigenbedarf des Windparks bezeichnet. Dieser Eigenbedarf wird in einem Normalbetrieb üblicherweise von dem Innerparknetz 16 mit Hilfe der elektrische Energie liefernden Windenergieanlagen 11 befriedigt.

Der Eigenbedarf muss aber im Wesentlichen immer gewährleistet sein, also auch dann, wenn zum Beispiel während eines Sturms die Windenergieanlagen 11 abgeschaltet sind und die WEA-Generatoren 13 damit im Wesentlichen keine elektrische Energie an das erste Netz 16 mehr liefern. In diesem Fall wird bei der elektrischen Schaltung 10 der Eigenbedarf des Windparks dadurch befriedigt, dass das erste Netz 16 über das Übertragungsnetz 20 mit dem Land-Netz verbunden ist und damit das erste Netz 16 von dem Land-Netz mit elektrischer Energie versorgt wird. So kann bei der elektrischen Schaltung 10 auch bei abgeschalteten Windenergieanlagen 11 der Eigenbedarf des Windparks im Wesentlichen immer über das Übertragungsnetz 20 aus dem Land-Netz gewährleistet werden.

Nur im Falle einer Unterbrechung der Verbindung von dem ersten Netz 16 (Innerparknetz) zu dem Land-Netz, also beispielsweise im Falle einer Unterbrechung des Übertragungsnetzes 20, ist der Eigenbedarf des Windparks nicht gewährleistet. Für diesen Fall ist jedoch die Brennkraftmaschine 22 mit dem Generator 23 und dem Transformator 24 vorgesehen.

Während in einem Normalbetrieb, in dem das erste Netz 16 elektrische Energie entweder von den Windenergieanlagen 11 und/oder dem Übertragungsnetz 20 (im Falle einer Stilllegung der Windenergieanlagen 11) beziehen kann, das erste Netz 16 mit einer ersten Betriebsspannung von z.B. etwa 33 kV betrieben wird, ist erfindungsgemäß vorgesehen, dass in einer von dem Normalbetrieb abweichenden zweiten Betriebsart das erste Netz 16 mit einer zweiten Betriebsspannung betrieben wird, die kleiner ist als die erste Betriebsspannung von ca. 33 kV. Dadurch wird einerseits erreicht, dass ein Blindleistungsbedarf für den Betrieb des ersten Netzes 16 (sog. Ladeleistung) gegenüber dem Normalbetrieb mit z.B. 33 kV sinkt. Ferner sinkt auch die Varianz des Blindleistungsbedarfs entsprechend, so dass das erste Netz 16 auch mittels des Generators 23 zuverlässig betrieben werden kann, insbesondere um nach wie vor den Eigenbedarf des Windparks zu decken.

Die zweite Betriebsart unterscheidet sich dadurch von der ersten Betriebsart, d.h. dem Normalbetrieb, dass in der zweiten Betriebsart mindestens ein von einer Windenergieanlage 11 angetriebener Generator 13, vorzugsweise jedoch alle Generatoren 13, nicht mit dem ersten Netz 16 gekoppelt sind und/oder das erste Netz 16 von einem Energieversorgungsnetz getrennt ist. Dies ist beispielsweise dann der Fall, wenn die Windenergieanlagen 11 wenigstens vorübergehend stillgelegt sind, z.B. aufgrund eines Sturms, und wenn gleichzeitig keine Verbindung zwischen dem ersten Netz 16 und dem Land-Netz besteht, beispielsweise aufgrund einer Unterbrechung des Übertragungsnetzes 20.

Wird also bei abgeschalteten Windenergieanlagen 11 festgestellt, dass über das Übertragungsnetz 20 keine elektrische Energie mehr von dem Land-Netz zu dem Innerparknetz 16 übertragen werden kann, so wird der Eigenbedarf des Windparks gemäß der nachfolgend beschriebenen Vorgehensweise gedeckt.

Erfindungsgemäß ist vorgesehen, das Innerparknetz 16 in der zweiten Betriebsart mit einer gegenüber dem Normalbetrieb geringeren zweiten Betriebsspannung zu betreiben. Die zweite Betriebsspannung beträgt beispielsweise zwischen etwa 0,4 kV und etwa 6 kV. Dadurch ergibt sich vorteilhaft ein gegenüber dem Normalbetrieb wesentlich verringerter Blindleistungsbedarf (Ladeleistung) für den Betrieb des Innerparknetzes 16, so dass der Generator 22 in der zweiten Betriebsart vorteilhaft weitaus weniger Blindleistung für den Betrieb des Innerparknetzes 16 bereitstellen muss, als für den Normalbetrieb bei z.B. 33 kV erforderlich ist. Des weiteren ist die aufgrund nicht genau bekannter Kabelverlegelängen und Kabelparameter des Innerparknetzes 16 bedingte Varianz des Blindleistungsbedarfs ebenfalls reduziert, so dass eine exakte Kompensation der Ladeleistung des Innerparknetzes 16 durch den Generator 23 einfacher möglich ist als bei dem Spannungsniveau von 33 kV im Normalbetrieb.

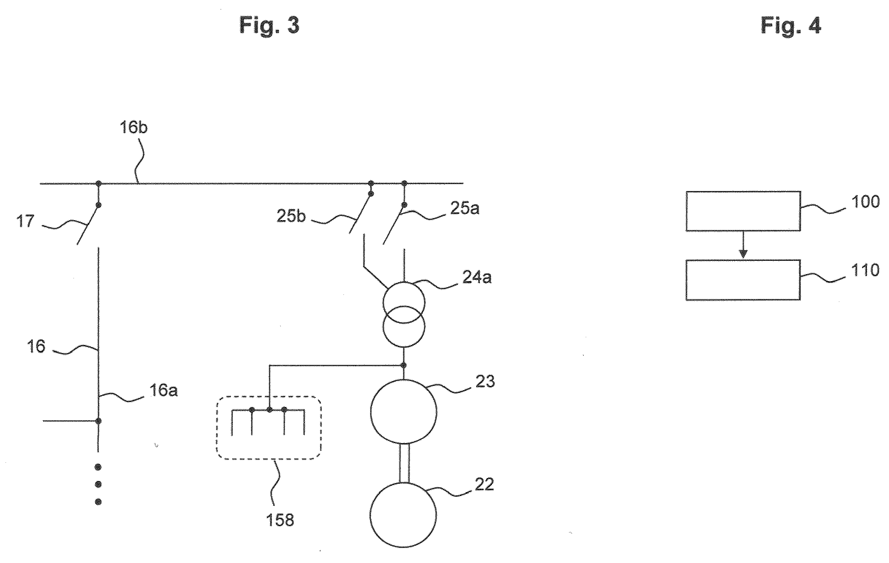

Figur 4 zeigt ein vereinfachtes Flussdiagramm einer Ausführungsform des erfindungsgemäßen Verfahrens. In einem ersten Schritt 100 wird das Innerparknetz 16 (Figur 1) in einer ersten Betriebsart, dem Normalbetrieb, betrieben. Hierbei sind die Schalter 15, 17, 18 (Figur 1) geschlossen, so dass das Innerparknetz 16 von den Windenergieanlagen 11 bzw. ggf. dem Übertragungsnetz 20 mit elektrischer Energie und insbesondere auch mit Blindleistung, nämlich als Ladeleistung für das Innerparknetz 16, versorgbar ist.

Ein ähnliches Betriebsszenario, bei dem die Schalter 17, 18 geschlossen sind, aber die Schalter 15 geöffnet sind, wird vorliegend ebenfalls als Normalbetrieb angesehen, weil das Innerparknetz 16 nach wie vor durch das Übertragungsnetz 20 mit der Ladeleistung versorgbar ist. Gleichsam kann eine Konfiguration, bei der mindestens ein Schalter 15 geschlossen ist, der Schalter 18 jedoch offen ist, als Normalbetrieb angesehen werden, weil die Ladeleistung für das Innerparknetz 16 dann zwar nicht aus dem Übertragungsnetz 20 beziehbar ist, jedoch von der dem Schalter 15 zugeordneten Windenergieanlage 11 geliefert werden kann.

Demgegenüber ergibt sich in Schritt 110 aus Figur 4 eine zweite Betriebsart, die von dem Normalbetrieb des Schritts 100 verschieden ist, dann, wenn die Schalter 15 und 18 offen sind, das Innerparknetz 16 mithin weder von einer Windenergieanlage 11 noch von dem Übertragungsnetz 20 mit der für seinen Betrieb nötigen Ladeleistung versorgbar ist.

In dieser zweiten Betriebsart wird vorteilhaft der Schalter 25 geschlossen, so dass der Dieselgenerator 23 das Innerparknetz 16 über den Transformator 24 mit einer Betriebsspannung versorgen kann. Erfindungsgemäß ist diese Betriebsspannung für die zweite Betriebsart geringer als die Betriebsspannung von ca. 33 kV in dem Normalbetrieb, so dass der Dieselgenerator 23 weniger Ladeleistung für das Innerparknetz 16 bereitstellen muss als in dem Normalbetrieb erforderlich ist.

Um den Eigenbedarf der Windenergieanlagen decken zu können, ist neben dem Schalter 25 auch der Schalter 17 geschlossen, so dass beide Abschnitte 16a, 16b des Innerparknetzes 16 miteinander verbunden sind und mit der Betriebsspannung für die zweite Betriebsart betreibbar sind.

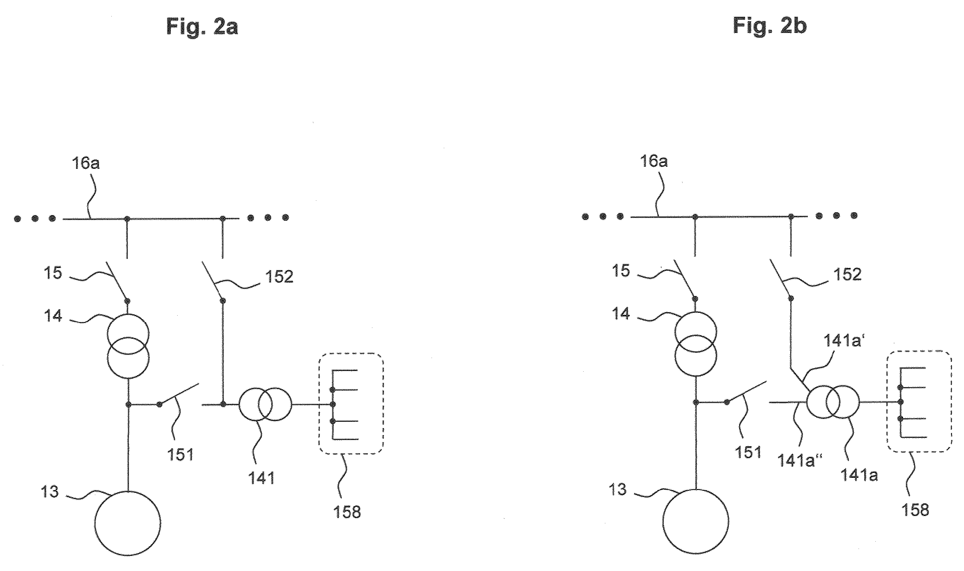

Figur 2a zeigt eine Ausführungsform der Erfindung, bei der ein WEA-Generator 13 einer Windenergieanlage des Windparks bzw. der ihm zugeordnete WEA-Transformator 14 mittels des Schalters 15 von dem Innerparknetz 16 bzw. seinem ersten Abschnitt 16a entkoppelt sind. Um dennoch den Eigenbedarf der betrachteten Windenergieanlage decken zu können, ist ein Eigenbedarfstransformator 141 der Windenergieanlage mittels des Schalters 152 mit dem Innerparknetz 16 verbindbar. Der Block 158 aus Figur 2a symbolisiert den Eigenbedarf der Windenergieanlage repräsentierende Verbraucher bzw. ein entsprechendes Eigenbedarfs-Teilnetz.

In dem Normalbetrieb 100 (Figur 4) sind die Schalter 15, 151 geschlossen, und der Schalter 152 ist offen. Dadurch kann der WEA-Generator 13 elektrische Leistung über den WEA-Transformator 14 und den Schalter 15 in das Innerparknetz 16 einspeisen. Der Eigenbedarfstransformator 141 wird über den Schalter 151 direkt von dem WEA-Generator 13 mit Energie versorgt. In dem Normalbetrieb wird das Innerparknetz 16 z.B. mit einer ersten Betriebsspannung von ca. 33 kV betrieben.

In der zweiten Betriebsart 110 (Figur 4) sind die Schalter 15, 151 geöffnet, und der Schalter 152 ist geschlossen. Nun bezieht der Eigenbedarfstransformator 141 elektrische Energie direkt aus dem Innerparknetz 16, das hierzu von dem Dieselgenerator 23 wie bereits beschrieben gespeist wird. In der zweiten Betriebsart wird das Innerparknetz 16 z.B. mit einer zweiten Betriebsspannung von z.B. ca. 2 kV betrieben, die z.B. der Ausgangsspannung des WEA-Generators 13 in dem Normalbetrieb entspricht. Dadurch kann der Eigenbedarfstransformator 141 wahlweise mit dem WEA-Generator 13 oder dem Innerparknetz 16 verbunden werden. Der Eigenbedarfstransformator 141 transformiert das Spannungsniveau des Innerparknetzes 16 von ca. 2 kV z.B. auf 0,4 kV für die Versorgung der Eigenbedarfsverbraucher 158.

Durch die in der zweiten Betriebsart gegenüber dem Normalbetrieb verringerte Betriebsspannung des Innerparknetzes 16 muss der Dieselgenerator 23 weniger Ladeleistung für das Innerparknetz 16 bereitstellen, und die Varianz der benötigten Ladeleistung ist ebenfalls kleiner, wodurch sich die Möglichkeit einer präziseren Versorgung des Innerparknetzes 16 mit der exakten Ladeleistung und damit ein zuverlässigerer Betrieb ergibt.

Figur 2b zeigt eine weitere Ausführungsform der Erfindung. Im Unterschied zu Figur 2a weist der Eigenbedarfstransformator 141a zwei unterschiedliche Primärwicklungsanschlüsse 141a', 141a" auf. Das Übersetzungsverhältnis bezüglich der Primärwicklungsanschlüsse 141a', 141a" ist vorteilhaft so gewählt, dass der Eigenbedarfstransformator 141a in einem Normalbetrieb, in dem der WEA-Generator 13 eine Ausgangsspannung von ca. 2 kV bereitstellt, über seinen Primärwicklungsanschluss 141a" direkt mit dem WEA-Generator 13 verbindbar ist, und dass der Eigenbedarfstransformator 141a in der zweiten Betriebsart, in der das Innerparknetz 16 mit einer Spannung von etwa 6 kV betrieben wird, über seinen Primärwicklungsanschluss 141a' direkt mit dem Innerparknetz 16 verbindbar ist.

In dem Normalbetrieb sind mithin die Schalter 15, 151 geschlossen und ist der Schalter 152 offen, so dass der Eigenbedarfstransformator 141a primärseitig über seinen Anschluss 141a" von dem WEA-Generator 13 mit einer Spannung von ca. 2 kV versorgt wird und diese in eine Sekundärspannung von ca. 0,4 kV transformiert.

Demgegenüber sind in der zweiten Betriebsart die Schalter 15, 151 offen und ist der Schalter 152 geschlossen, so dass der Eigenbedarfstransformator 141a primärseitig über seinen Anschluss 141a' direkt von dem Innerparknetz 16 mit einer Spannung von ca. 6 kV versorgt wird und diese in eine Sekundärspannung von ca. 0,4 kV transformiert. In diesem Fall stellt der Dieselgenerator 23 mithilfe seine Transformators 24 also eine Ausgangsspannung von ca. 6 kV zum Betrieb des Innerparknetzes 16 bereit.

Der Anschluss 141a" kann vorteilhaft als Anzapfung der Primärwicklung des Eigenbedarfstransformators 141a ausgebildet sein.

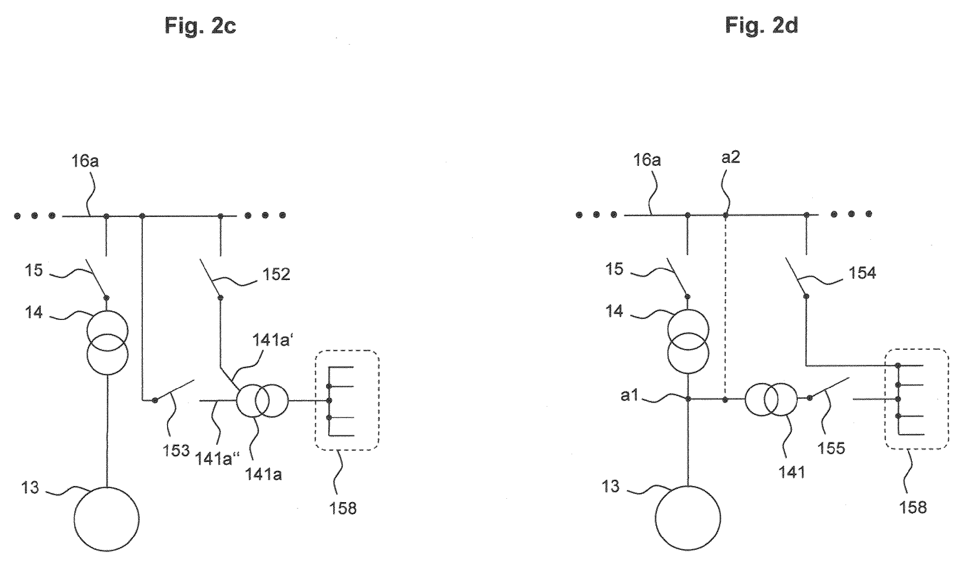

Figur 2c zeigt eine weitere Ausführungsform der Erfindung. Bei dieser Variante ist der WEA-Transformator 14 über den Schalter 15 mit dem Innerparknetz 16 koppelbar. Ferner weist der Eigenbedarfstransformator 141a wiederum zwei unterschiedliche Primärwicklungsanschlüsse 141a', 141a" auf, von denen jeweils einer über die Schalter 152, 153 mit dem Innerparknetz 16 verbindbar ist.

Das Übersetzungsverhältnis bezüglich der Primärwicklungsanschlüsse 141a', 141a" ist vorteilhaft so gewählt, dass der Eigenbedarfstransformator 141a in einem Normalbetrieb, in dem das Innerparknetz 16 mit einer ersten Betriebsspannung von etwa 33 kV betrieben wird, die Spannung von 33 kV auf eine Ausgangsspannung von z.B. 0,4 kV umsetzt, und dass der Eigenbedarfstransformator 141a in der zweiten Betriebsart, in der das Innerparknetz 16 mit einer Betriebsspannung von etwa 6 kV betrieben wird, über seinen Primärwicklungsanschluss 141a' direkt mit dem Innerparknetz 16 verbindbar ist und die Spannung von 6 kV auf eine Ausgangsspannung von z.B. 0,4 kV umsetzt.
In dem Normalbetrieb sind mithin die Schalter 15, 153 geschlossen und ist der Schalter 152 offen, so dass der Eigenbedarfstransformator 141a primärseitig über seinen Anschluss 141a" von dem Innerparknetz 16 mit einer Spannung von ca. 33 kV versorgt wird und diese in eine Sekundärspannung von ca. 0,4 kV transformiert.

Demgegenüber sind in der zweiten Betriebsart die Schalter 15, 153 offen und ist der Schalter 152 geschlossen, so dass der Eigenbedarfstransformator 141a primärseitig über seinen Anschluss 141a' direkt von dem Innerparknetz 16 mit einer Spannung von ca. 6 kV versorgt wird und diese in eine Sekundärspannung von ca. 0,4 kV transformiert.

Figur 2d zeigt eine weitere Erfindungsvariante, bei der die Eigenbedarfsversorgung über den Schalter 154 direkt aus dem Innerparknetz 16 erfolgen kann. In diesem Fall ist das Innerparknetz 16 in der zweiten Betriebsart dementsprechend mit einer geeigneten Spannung von beispielsweise ca. 0,4 kV zu betreiben. Diese Betriebsspannung für das Innerparknetz 16 kann wiederum von dem Dieselgenerator 23 (Figur 1) bereitgestellt werden, der hierfür z.B. auch direkt, also unter Überbrückung des Transformators 24, mit dem Innerparknetz 16 verbindbar ausgelegt sein kann.

In dem Normalbetrieb, bei dem das Innerparknetz 16 gemäß Figur 2d z.B. mit 33 kV betrieben wird, ist der Schalter 154 geöffnet, und der Schalter 155 ist geschlossen, so dass der Eigenbedarf 158 der Windenergieanlage über den Eigenbedarfstransformator 141 gedeckt werden kann. Der Eigenbedarfstransformator 141 kann hierfür primärseitig entweder mit dem Anschlusspunkt a1, also dem Ausgang des WEA-Generators 13, oder aber mit dem Anschlusspunkt a2, also direkt mit dem Innerparknetz 16, verbunden sein. Je nach Verwendung der Anschlusspunkte a1, a2 und der Betriebsspannungen der Komponenten 13, 16 in dem Normalbetrieb ist das Übersetzungsverhältnis des Eigenbedarfstransformators 141 geeignet zu wählen.

Die vorstehend unter Bezugnahme auf die Figuren 2a bis 2d beschriebenen Ausführungsformen sind auch miteinander kombinierbar. D.h., unterschiedliche Windenergieanlagen desselben Windparks können jeweils unterschiedliche Konfigurationen gemäß der Figuren 2a bis 2d aufweisen, wobei insbesondere die Übertragungsverhältnisse ggf. verwendeter Eigenbedarfstransformatoren 141, 141a geeignet zu wählen sind.

Figur 3 zeigt eine weitere Ausführungsform einer erfindungsgemäßen Schaltung, bei der der Dieselgenerator 23 über einen Transformator 24a mit mehreren Sekundärwicklungsanschlüssen (nicht näher bezeichnet), denen die Schalter 25a, 25b zugeordnet sind, mit dem Innerparknetz 16 koppelbar ist.

Beispielsweise ist in einem Normalbetrieb der Schalter 25a geschlossen, und der Schalter 25b ist offen. In diesem Fall setzt der Transformator 24a die Betriebsspannung des Innerparknetzes 16 von ca. 33 kV auf ca. 0,4 kV um zur Deckung des Eigenbedarfs 158 z.B. eines Umspannwerks, auf dessen Offshore-Plattform (nicht gezeigt) der Transformator 24a angeordnet ist.

In der zweiten Betriebsart ist der Schalter 25a offen und der Schalter 25b geschlossen, so dass die Ausgangsspannung des Dieselgenerators 23 auf eine geeignete Betriebsspannung für das Innerparknetz 16 von ca. 6 kV transformiert werden kann.

Besonders bevorzugt wird einer Ausführungsform zufolge eine Betriebsspannung von ca. 6 kV für die zweite Betriebsart des Innerparknetzes 16 gewählt, weil diese Spannung eine typische Ausgangsspannung gängiger Dieselgeneratoren 23 bzw. ist bzw. von Transformatoren 24, die den Dieselgeneratoren 23 zugeordnet sind.

Generell ist die zweite Betriebsspannung für den Betrieb des Innerparknetzes 16 frei wählbar und bietet, sofern sie geringer ist als die erste Betriebsspannung von z.B. 33 kV, die im Normalbetrieb verwendet wird, die vorstehend beschriebenen Vorteile der geringeren Ladeleistung und der geringeren Varianz der Ladeleistung, so dass vorteilhaft auf zusätzliche Stellglieder zum Abgleich der Blindleistung insbesondere in einem Netzersatzbetrieb verzichtet werden kann.

## Patentansprüche

1. Verfahren zum Betreiben einer elektrischen Schaltung (10) für einen Windpark, wobei die elektrische Schaltung (10) ein erstes Netz (16) aufweist, wobei das erste Netz (16) in einem Normalbetrieb, in dem mindestens ein von einer Windenergieanlage (11) angetriebener Generator (13) mit dem ersten Netz (16) gekoppelt ist, mit einer ersten Betriebsspannung betrieben wird, **dadurch gekennzeichnet, dass** das erste Netz (16) in einer von dem Normalbetrieb verschiedenen zweiten Betriebsart mit einer zweiten Betriebsspannung betrieben wird, wobei die zweite Betriebsspannung kleiner ist als die erste Betriebsspannung.

2. Verfahren nach Anspruch 1, wobei in der zweiten Betriebsart a) mindestens ein von einer Windenergieanlage (11) angetriebener Generator (13) nicht mit dem ersten Netz (16) gekoppelt ist und/oder b) das erste Netz (16) von einem Energieversorgungsnetz getrennt ist.

3. Verfahren nach einem der vorstehenden Ansprüche, wobei die erste Betriebsspannung etwa 33 kV oder mehr beträgt, und wobei die zweite Betriebsspannung zwischen etwa 0,4 kV und etwa 6 kV beträgt.

4. Verfahren nach einem der vorstehenden Ansprüche, wobei in der zweiten Betriebsart mindestens ein die zweite Betriebsspannung bereitstellender Generator (23) mit dem ersten Netz (16) verbunden wird.

5. Verfahren nach Anspruch 4, wobei der Generator (23) über einen Transformator (24) mit dem ersten Netz (16) verbunden wird.

6. Verfahren nach einem der vorstehenden Ansprüche, wobei in der zweiten Betriebsart mindestens eine Windenergieanlage (11) über das erste Netz (16) durch die zweite Betriebsspannung mit elektrischer Energie zur Deckung ihres Eigenbedarfs versorgt wird.

7. Verfahren nach einem der vorstehenden Ansprüche, wobei mindestens ein zu einem elektrischen Eigenbedarf einer Windenergieanlage beitragender Verbraucher (158) in der zweiten Betriebsart entweder direkt oder über einen Eigenbedarfstransformator (141, 141a) mit dem ersten Netz (16) verbunden wird.

8. Elektrische Schaltung (10) für einen Windpark, wobei die elektrische Schaltung (10) ein erstes Netz (16) aufweist, wobei das erste Netz (16) in einem Normalbetrieb, in dem mindestens ein von einer Windenergieanlage (11) angetriebener Generator (13) mit dem ersten Netz (16) gekoppelt ist, mit einer ersten Betriebsspannung betreibbar ist, **dadurch gekennzeichnet, dass** die Schaltung (10) dazu ausgebildet ist, das erste Netz (16) in einer von dem Normalbetrieb verschiedenen zweiten Betriebsart mit einer zweiten Betriebsspannung zu betreiben, wobei die zweite Betriebsspannung kleiner ist als die erste Betriebsspannung.

9. Elektrische Schaltung (10) nach Anspruch 8, wobei die erste Betriebsspannung etwa 33 kV oder mehr beträgt, und wobei die zweite Betriebsspannung zwischen etwa 0,4 kV und etwa 6 kV beträgt.

10. Elektrische Schaltung (10) nach einem der Ansprüche 8 bis 9, wobei in der zweiten Betriebsart mindestens ein die zweite Betriebsspannung bereitstellender Generator (23) mit dem ersten Netz (16) verbunden ist.

11. Elektrische Schaltung (10) nach einem der Ansprüche 8 bis 10, wobei mindestens ein zu einem elektrischen Eigenbedarf einer Windenergieanlage beitragender Verbraucher (158) in der zweiten Betriebsart entweder direkt oder über einen Eigenbedarfstransformator (141, 141a) mit dem ersten Netz (16) verbindbar ist.

## Claims

1. Method for operating an electric circuit (10) for a wind farm, wherein the electric circuit (10) has a first network (16), wherein the first network (16) is operated with a first operating voltage in a normal operating mode in which at least one generator (13) driven by a wind energy installation (11) is coupled to the first network (16), **characterized in that** the first network (16) is operated with a second operating voltage in a second operating mode different from the normal operating mode, wherein the second operating voltage is lower than the first operating voltage.

2. Method according to claim 1, wherein in the second operating mode, a) at least one generator (13) driven by a wind energy installation (11) is not coupled to the first network (16), and/or b) the first network (16) is isolated from an energy supply network.

3. Method according to any of the preceding claims, wherein the first operating voltage is around 33 kV or more, and wherein the second operating voltage lies between around 0.4 kV and around 6 kV.

4. Method according to any of the preceding claims, wherein in the second operating mode, at least one generator (23) providing the second operating voltage is connected to the first network (16).

5. Method according to claim 4, wherein the generator (23) is connected to the first network (16) via a transformer (24).

6. Method according to any of the preceding claims, wherein in the second operating mode, at least one wind energy installation (11) is supplied with electrical energy to cover its own requirements by the second operating voltage via the first network (16).

7. Method according to any of the preceding claims, wherein in the second operating mode, at least one consumer (158) contributing to an electrical own requirement of a wind energy installation is connected to the first network (16) either directly or via an auxiliary transformer (141, 141a).

8. Electric circuit (10) for a wind farm, wherein the electric circuit (10) has a first network (16), wherein the first network (16) can be operated with a first operating voltage in a normal operating mode in which at least one generator (13) driven by a wind energy installation (11) is coupled to the first network (16), **characterized in that** the circuit (10) is configured to operate the first network (16) with a second operating voltage in a second operating mode different from the normal operating mode, wherein the second operating voltage is lower than the first operating voltage.

9. Electric circuit (10) according to claim 8, wherein the first operating voltage is around 33 kV or more, and wherein the second operating voltage lies between around 0.4 kV and around 6 kV.

10. Electric circuit (10) according to one of claims 8 to 9, wherein in the second operating mode, at least one generator (23) providing the second operating voltage is connected to the first network (16).

11. Electric circuit (10) according to any of claims 8 to 10, wherein in the second operating mode, at least one consumer (158) contributing to an electrical own requirement of a wind energy installation can be connected to the first network (16) either directly or via an auxiliary transformer (141, 141a).

## Revendications

1. Procédé de fonctionnement d'un circuit électrique (10) pour un parc éolien, dans lequel le circuit électrique (10) présente un premier réseau (16), le premier réseau (16), en fonctionnement normal dans lequel au moins un générateur (13) entraîné par une installation d'énergie éolienne (11) est couplé au premier réseau (16), fonctionnant avec une première tension de service, **caractérisé en ce que** le premier réseau (16) fonctionne dans un deuxième mode de fonctionnement différent du fonctionnement normal avec une deuxième tension de service, la deuxième tension de service étant inférieure à la première tension de service.

2. Procédé selon la revendication 1, dans lequel dans le deuxième mode de fonctionnement a) au moins un générateur (13) entraîné par une installation d'énergie éolienne (11) n'est pas couplé au premier réseau (16) et/ou b) le premier réseau (16) est séparé d'un réseau d'alimentation en énergie.

3. Procédé selon l'une des revendications précédentes, dans lequel la première tension de service est d'environ 33 kV ou supérieure, et la deuxième tension de service est comprise entre environ 0,4 kV et environ 6 kV.

4. Procédé selon l'une des revendications précédentes, dans lequel dans le deuxième mode de fonctionnement au moins un générateur (23) fournissant la deuxième tension de service est raccordé au premier réseau (16).

5. Procédé selon la revendication 4, dans lequel le générateur (23) est raccordé au premier réseau (16) par le biais d'un transformateur (24).

6. Procédé selon l'une des revendications précédentes, dans lequel dans le deuxième mode de fonctionnement au moins une installation d'énergie éolienne (11) est alimentée en énergie électrique via le premier réseau (16) par la deuxième tension de service pour couvrir ses propres besoins.

7. Procédé selon l'une des revendications précédentes, dans lequel au moins un consommateur (158) contribuant à une installation d'énergie éolienne pour ses propres besoins électriques dans le deuxième mode de fonctionnement est raccordé au premier réseau (16) directement ou par le biais d'un transformateur propre (141, 141a).

8. Circuit électrique (10) pour un parc éolien, dans lequel le circuit électrique (10) présente un premier réseau (16), le premier réseau (16), en fonctionnement normal dans lequel au moins un générateur (13) entraîné par une installation d'énergie éolienne (11) est couplé au premier réseau (16), pouvant fonctionner avec une première tension de service, **caractérisé en ce que** le circuit (10) est conçu pour faire fonctionner le premier réseau (16) dans un deuxième mode de fonctionnement différent du mode de fonctionnement normal avec une deuxième tension de service, la deuxième tension de service étant inférieure à la première tension de service.

9. Circuit électrique (10) selon la revendication 8, dans lequel la première tension de service est d'environ 33 kV ou supérieure, et dans lequel la deuxième tension de service est comprise entre environ 0,4 kV et environ 6 kV.

10. Circuit électrique (10) selon l'une des revendications 8 à 9, dans lequel dans le deuxième mode de fonctionnement au moins un générateur (23) fournissant la deuxième tension de service est raccordé au premier réseau (16).

11. Circuit électrique (10) selon l'une des revendications 8 à 10, dans lequel au moins un consommateur (158) contribuant à une installation d'énergie éolienne pour ses propres besoins électriques peut être raccordé au premier réseau (16) dans le deuxième mode de fonctionnement directement ou par le biais d'un transformateur propre (141, 141a).
